# FASCICULE DE BREVET EUROPEEN

(11) **EP 1 865 412 B1**
(45) Date de publication et mention de la délivrance du brevet: **11.02.2009**
(21) Numéro de dépôt: 07108886.8
(22) Date de dépôt: 24.05.2007
(51) Int. Cl.: G06F 9/44

(54) **Pilotage d'un dispositif multifonctions**
Steuerung einer Multifunktionsvorrichtung
Control of a multifunctional device

(30) Priorité: 09.06.2006 FR 0605147
(43) Date de publication de la demande: 12.12.2007
(73) Titulaire: Dibcom, 91120 Palaiseau (FR)
(72) Inventeur: Belanger-Basset, Isabelle, 75014 Paris (FR); Kanounnikoff, François, 94120 Fontenay sous Bois (FR)
(74) Mandataire: Cabinet Plasseraud

(56) Documents cités:
- US-A- 5 809 329
- US-A1- 2002 161 939

## Description

La présente invention concerne les pilotes de dispositifs électroniques multifonctions destinés à être connectés à des ordinateurs.

La plupart des dispositifs électroniques, tels que les cartes électroniques ou les périphériques, destinés à être raccordés à un ordinateur, requièrent des pilotes exécutés par l'ordinateur.

Ces pilotes sont en principe des programmes d'ordinateur, également appelés « drivers », aptes à piloter le fonctionnement du dispositif lorsqu'ils sont exécutés par l'ordinateur.

En général, les ordinateurs comportent d'importantes bases de données répertoriant les pilotes disponibles ou des liens vers des bases de données externes, telles que des bases de données accessibles sur le réseau Internet.

Chaque dispositif comporte un identifiant de dispositif et se déclare à l'ordinateur ou, plus précisément, au système d'exploitation de l'ordinateur, lorsqu'il y est connecté. Cette déclaration se fait lors d'une phase dite d'énumération.

L'identifiant de dispositif transmis lors de l'énumération permet à l'ordinateur de trouver, dans une base de données interne ou externe, le pilote correspondant au dispositif.

Une fois le pilote identifié puis chargé en mémoire, il est exécuté sur l'ordinateur, ce qui permet d'accéder aux fonctions du dispositif.

Dans certains modes de réalisation, le pilote du dispositif commande la transmission d'un module de contrôle vers le dispositif qui l'exécute. Ce module de contrôle est également appelé « firmware » et communique avec le pilote exécuté par l'ordinateur. En général, le module de contrôle est stocké de manière temporaire dans le dispositif de manière à être facilement mis à jour pour faire évoluer les fonctionnalités du dispositif.

Par ailleurs, certains dispositifs offrent plusieurs fonctions, chacune nécessitant son propre pilote et disposant de son propre identifiant. Dans certains cas, la connexion d'un tel dispositif multifonctions requière deux phases d'énumération. Lors d'une première énumération, le dispositif transmet à l'ordinateur son identifiant de dispositif grâce auquel l'ordinateur charge puis exécute un pilote correspondant, entraînant la transmission, vers le dispositif, d'un module de contrôle.

Le module de contrôle simule alors la déconnexion du dispositif et entame une seconde énumération ou ré-énumération au cours de laquelle des identifiants de fonction, distincts de l'identifiant de dispositif et distincts entre eux, sont transmis à l'ordinateur. Chacun de ces identifiants de fonction correspond à une des fonctions du dispositif. En réponse à la réception de ces identifiants de fonction, l'ordinateur exécute des pilotes, chacun permettant le pilotage d'une fonction correspondante au travers du module de contrôle.

Un tel mode de réalisation présente toutefois certains inconvénients. En effet, certains types d'ordinateur sont prévus pour passer dans des modes de veille lorsqu'ils ne sont pas utilisés pendant un certain temps ou dans d'autres conditions. Ces modes de veille, ou hibernation, entraînent généralement une coupure de l'alimentation des périphériques et dispositifs connectés à l'ordinateur. En conséquence de telles coupures d'alimentation, la mémoire temporaire du dispositif est effacée, de sorte que le module de contrôle, apte à dialoguer avec les pilotes correspondants aux fonctions, est également effacé.

Lorsque l'ordinateur redémarre à l'issue d'une période de veille, il n'est alors plus capable de piloter le dispositif qui présente un identifiant de dispositif différent de ceux auxquels sont associés les pilotes chargés dans la mémoire, ces pilotes étant associés aux identifiants de fonction obtenus après la reénumération. Ceci à pour effet que l'ordinateur détruit ces pilotes de fonction de sa mémoire. Il en résulte que tout logiciel applicatif en cours d'exécution qui utilise ces pilotes de fonction cesse de fonctionner.

Un but de la présente invention est de permettre de connecter et d'utiliser un dispositif multifonctions dont le comportement n'est pas altéré par une coupure temporaire d'alimentation.

Le document US 5 809 329 décrit un procédé de connexion d'un dispositif multifonctions à un ordinateur, mais ne résout pas le problème antérieurement.

A cet effet, la présente invention a pour objet un procédé de connexion d'un dispositif multifonctions à un ordinateur, caractérisé en ce qu'il comprend les étapes suivantes :
- la transmission par ledit dispositif d'un identifiant de dispositif vers ledit ordinateur ;
- l'exécution par ledit ordinateur d'un pilote du dispositif associé audit identifiant de dispositif ;
- l'obtention d'une liste des fonctions du dispositif par ledit ordinateur ;
- le déclenchement par le pilote du dispositif et sur ledit ordinateur, de l'exécution de pilotes associés auxdites fonctions listées et ;
- la gestion, par ledit pilote du dispositif, des flux de données entre les différentes fonctions du dispositif et lesdits pilotes de fonction correspondants.

Ainsi, les échanges entre le dispositif et l'ordinateur se font toujours au travers du pilote du dispositif rendant l'ensemble robuste à l'encontre des ruptures d'alimentation du dispositif et évitant une ré-énumeration.

Selon d'autres caractéristiques de l'invention :
- ladite étape d'exécution du pilote du dispositif entraîne la transmission, vers le dispositif, d'un module de contrôle apte à établir ladite liste des fonctions, ce qui permet de faire évoluer les échanges entre l'ordinateur et le dispositif ;
- ledit pilote du dispositif est également un pilote de l'une des fonctions du dispositif, ce mode de réalisation permettant de simplifier l'architecture globale;
- une des fonctions dudit dispositif est une fonction de réception d'un signal de télévision et une autre fonction du dispositif est une fonction de réception d'un signal infrarouge.

L'invention concerne également un programme d'ordinateur de pilotage d'un dispositif multifonctions destiné à être connecté audit ordinateur, ledit programme comportant des instructions de code logiciel qui, lorsque exécutées par un calculateur dudit ordinateur, entraînent :
- en réponse à la réception d'un identifiant de dispositif, l'exécution, par ledit ordinateur, d'un pilote du dispositif associé audit identifiant de dispositif ;
- en réponse à la réception d'une liste des fonctions dudit dispositif, le déclenchement, par le pilote du dispositif et sur ledit ordinateur, de l'exécution de pilotes associés auxdites fonctions listées et ;
- la gestion, par ledit pilote du dispositif, des flux de données entre les différentes fonctions du dispositif et lesdits pilotes de fonction correspondants.

Selon d'autres fonctionnalités de ce programme :
- il comporte des instructions de code logiciel qui, lorsque exécutées par un calculateur dudit ordinateur, entraînent à l'issue de l'exécution du pilote du dispositif, la transmission, vers le dispositif, d'un module de contrôle apte à établir ladite liste des fonctions ; et
- il comporte des instructions de code logiciel qui, lorsque exécutées par un calculateur dudit ordinateur, entraînent le traitement d'un des flux de données provenant dudit dispositif.

L'invention sera mieux décrite à la lumière de la description qui va suivre, faite en référence aux figures annexées, sur lesquelles :
- la figure 1 représente schématiquement un ordinateur connecté à un dispositif multifonctions ; et
- la figure 2 représente l'organigramme du procédé de l'invention.

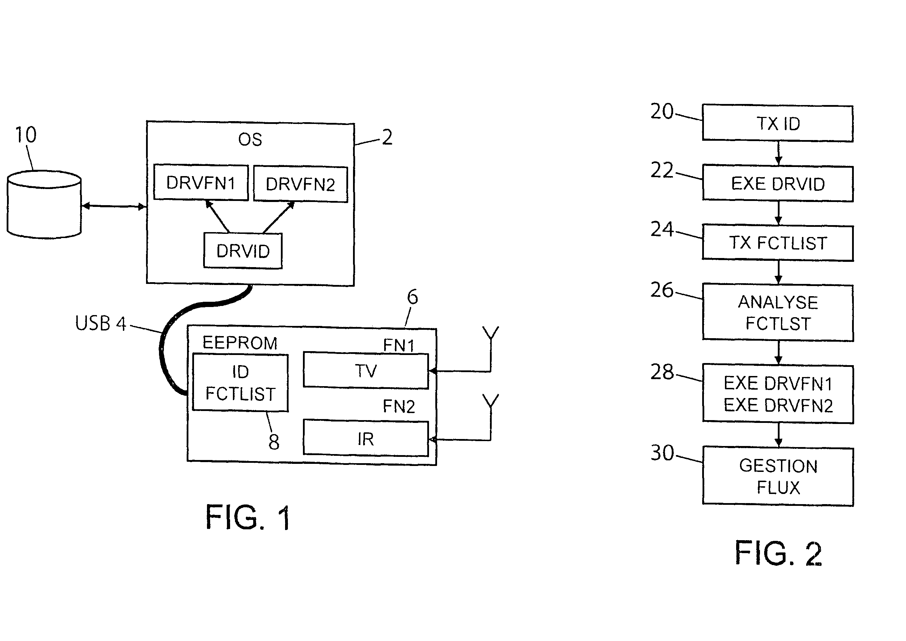

Sur la figure 1, on a représenté un ordinateur, tel qu'un ordinateur personnel 2, sur lequel fonctionne de manière classique un système d'exploitation ou OS.

Cet ordinateur 2 est connecté par l'intermédiaire d'une liaison 4 de type USB à un dispositif 6 de réception de télévision commandé par infrarouge.

Dans l'exemple, ce dispositif se présente sous la forme d'une carte électronique fonctionnant grâce à l'alimentation fournie par la liaison USB 4.

La carte 6 est apte à mettre en oeuvre plusieurs fonctions. Une première fonction FN1 permet la réception d'un flux de données de télévision et notamment, d'un programme de télévision numérique ou analogique. Une seconde fonction FN2 permet la réception d'un flux de données infrarouges correspondant à la sélection d'un canal de télévision émis par une télécommande infrarouge.

L'intégration sur une carte électronique de chaînes de traitement pour de tels flux de données est classique et ne sera pas décrite plus en détails ici.

Par ailleurs, la carte 6 comporte également une mémoire permanente 8 telle qu'une EEPROM dans laquelle sont stockés un identifiant de dispositif noté ID et une liste des fonctions mises en oeuvre par la carte 6 notée FCTLIST.

Enfin, l'ordinateur 2 a accès à une base de données 10 comprenant des pilotes ou « drivers ». Cette base de données 10 contient notamment des pilotes notés DRVFN1, DRVFN2 et DRVID, associés respectivement à chacune des fonctions FN1 et FN2 et à l'identifiant de dispositif ID.

En référence à la figure 2, on va maintenant décrire le procédé de connexion du dispositif multifonctions selon l'invention.

Lorsque la carte 6 est connectée à l'ordinateur 2 pour la première fois, il s'en suit une phase d'énumération entre le système d'exploitation OS et la carte 6. Cette phase d'énumération comporte une étape 20 de transmission par la carte 6 de l'identifiant de dispositif ID vers l'ordinateur. Cette étape est réalisée de manière classique notamment grâce à l'utilisation d'une fonction d'énumérateur de bus mise en oeuvre par l'interface USB.

A l'issue de cette étape 20 de transmission, le système d'exploitation récupère dans la base de données 10 le pilote du dispositif 6 DRVID et l'exécute lors d'une étape 22.

L'exécution du pilote DRVID entraîne l'obtention par l'ordinateur de la liste des fonctions FCTLIST de la carte 6, lors d'une étape 24. Ceci est fait par échange de requêtes et de réponses entre le système d'exploitation OS et la carte 6.

Le pilote du dispositif DRVID comprend une structure particulière apte à, lorsqu'il est exécuté, déclencher l'exécution d'autres pilotes et notamment, l'exécution des pilotes des fonctions FN1 et FN2. En outre, le pilote DRVID est apte à gérer les flux entre différents pilotes et le dispositif comme cela sera décrit plus en détails plus loin.

Le procédé comprend ensuite une analyse de la liste des fonctions FCTLIST lors d'une étape 26, qui aboutit au déclenchement, par le pilote de dispositif DRVID, de l'exécution sur l'ordinateur 2 des pilotes associés aux fonctions listées, c'est-à-dire des pilotes DRVFN1 et DRVFN2 lors d'une étape 28.

Enfin, le procédé de l'invention comprend une étape 30 de gestion par le pilote de dispositif DRVID, des flux de données entre la carte 6 et les pilotes de fonctions DRVFN1 et DRVFN2. Ainsi, les fonctions FN1 et FN2 communiquent avec leurs pilotes correspondants DRVFN1 et DRVFN2 au travers du pilote de dispositif DRVID.

Plus précisément, dans l'exemple, les flux de données émis par les chaînes de traitement correspondant aux fonctions FN1 et FN2 sont émis sur le bus USB 4 en utilisant le même identifiant de dispositif, c'est-à-dire l'identifiant ID, mais avec en plus, un indicateur ou étiquette repérant les différentes fonctions.

Les flux de données émis sur la liaison USB sont donc référencés par le même identifiant ID et sont adressés au pilote correspondant, c'est-à-dire au pilote DRVID. Le pilote DRVID étant adapté pour gérer les flux de données, il repère les indicateurs correspondants aux différentes fonctions pour orienter les flux de données vers chacun des pilotes de fonction.

Ultérieurement, l'ordinateur 2 est mis en veille ce qui, dans l'exemple, entraîne une coupure de l'alimentation sur la liaison USB 4.

Lorsque l'ordinateur sort de la période veille, le pilote du dispositif DRVID vérifie la présence du dispositif correspondant sur la liaison USB. Cette vérification est positive puisque l'identifiant ID est mémorisé de manière permanente dans la carte 6. En conséquence, les communications reprendront directement et sans interruption entre la carte 6 et le pilote du dispositif DRVID. Ce pilote DRVID gère ensuite les flux entre les différentes chaînes de traitement correspondant aux fonctions FN1 et FN2 et les pilotes correspondants DRVFN1 et DRVFN2 comme décrit précédemment.

Ainsi, le problème décrit initialement est résolu grâce au pilote de l'invention et la coupure d'alimentation n'altère pas le fonctionnement de la carte et de l'ordinateur.

Bien entendu, d'autres modes de réalisation sont également possibles.

Dans une variante, le pilote de dispositif DRVID est confondu avec le pilote de l'une des fonctions.

Dans une autre variante, la liste des fonctions présentes sur la carte 6 peut être établie dynamiquement et non statiquement comme dans l'exemple décrit.

Dans un tel mode de réalisation, lorsque la carte 6 est connectée à l'ordinateur, le pilote de la carte est exécuté et commande la transmission d'un module de contrôle sur la carte. Ce module de contrôle, une fois transmis à la carte, vérifie les fonctions disponibles sur la carte et établit la liste des fonctions à transmettre au pilote de dispositif DRVID dans l'ordinateur. Le procédé continue ensuite tel que décrit précédemment.

En cas de rupture d'une alimentation et de reprise ultérieure, la transmission du module de contrôle et l'énumération dynamique peuvent être réalisées de nouveau mais en aucun cas le dispositif ne présente un identifiant différent de ceux auxquels sont associés les pilotes chargés dans la mémoire.

Par conséquent, les pilotes de fonctions ne sont jamais détruits de la mémoire de l'ordinateur et les logiciels applicatifs continuent donc de fonctionner normalement.

En effet, lors de la reprise du fonctionnement, l'ordinateur et la carte sont toujours aptes à dialoguer grâce au pilote de dispositif. Si le module de contrôle est nécessaire pour les communications, il est transmis à nouveau pour commander l'exécution des pilotes correspondants, une fois reçue la liste des fonctions.

Si ce module n'est pas nécessaire, les pilotes de fonction communiquent directement au travers du pilote du dispositif sans qu'aucune énumération ne soit nécessaire.

Par ailleurs, d'autres modes de réalisation qu'une connexion de type USB peuvent être envisagés, tels que des connexions de type PCI, l'utilisation de tout type de flux de télévision analogique ou numérique.

Dans un mode de réalisation utilisant une interface de type PCI, le dispositif est connecté lorsque l'ordinateur est éteint et est détecté par le BIOS au démarrage. Ultérieurement, ce sont des pilotes gérés par le système d'exploitation qui prennent en charge les échanges avec le dispositif.

Par ailleurs, l'invention n'est pas limitée à l'utilisation de deux fonctions sur un même dispositif mais peut bien entendu être appliquée à un nombre plus important de fonctions.

## Revendications

1. Procédé de connexion d'un dispositif multifonctions (6) à un ordinateur (2) comprenant les étapes suivantes :
- la transmission (22) par ledit dispositif d'un identifiant de dispositif (ID) vers ledit ordinateur ;
- l'exécution (24), par ledit ordinateur, d'un pilote du dispositif (DRVID) associé audit identifiant de dispositif ;
- l'obtention (26) d'une liste des fonctions du dispositif (FCTLIST) par ledit ordinateur ;
**caracterisé par**
- le déclenchement (28), par le pilote du dispositif et sur ledit ordinateur, de l'exécution de pilotes (DRVFN1, DRVFN2) associés auxdites fonctions listées et ;
- la gestion (30), par ledit pilote du dispositif, des flux de données entre les différentes fonctions du dispositif et lesdits pilotes de fonction correspondants.

2. Procédé selon la revendication 1, **caractérisé en ce que** ladite étape d'exécution du pilote du dispositif entraîne la transmission, vers le dispositif, d'un module de contrôle apte à établir ladite liste des fonctions.

3. Procédé selon l'une quelconque des revendications 1 et 2, **caractérisé en ce que** ledit pilote du dispositif est également un pilote de l'une des fonctions du dispositif.

4. Procédé selon l'une quelconque des revendications 1 à 3, **caractérisé en ce que** l'une des fonctions dudit dispositif est une fonction de réception d'un signal de télévision (TV) et une autre fonction du dispositif est une fonction de réception d'un signal infrarouge (IR).

5. Programme d'ordinateur de pilotage d'un dispositif multifonctions (6) destiné à être connecté audit ordinateur (2), ledit programme comportant des instructions de code logiciel qui, lorsque exécutées par un calculateur dudit ordinateur, entraînent :
- en réponse à la réception (20) d'un identifiant de dispositif (ID), l'exécution (22), par ledit ordinateur, d'un pilote du dispositif (DRVID) associée audit identifiant de dispositif ;
- en réponse à la réception (26) d'une liste des fonctions (FCTLIST) dudit dispositif, le déclenchement (28) par le pilote du dispositif et sur ledit ordinateur, de l'exécution de pilotes (DRVFN1, DRVFN2) associés auxdites fonctions listées et ;
- la gestion (30), par ledit pilote du dispositif, des flux de données entre les différentes fonctions du dispositif et lesdits pilotes de fonction correspondants.

6. Programme d'ordinateur selon la revendication 5, **caractérisé en ce qu'**il comporte des instructions de code logiciel qui, lorsque exécutées par un calculateur dudit ordinateur, entraînent à l'issue de l'exécution du pilote du dispositif, la transmission, vers le dispositif, d'un module de contrôle apte à établir ladite liste des fonctions.

7. Programme d'ordinateur selon l'une quelconque des revendications 5 et 6, **caractérisé en ce qu'**il comporte des instructions de code logiciel qui, lorsque exécutées par un calculateur dudit ordinateur, entraînent le traitement d'un des flux de données provenant dudit dispositif.

## Claims

1. Method of connecting a multifunction device (6) to a computer (2), comprising the following steps:
- transmitting (22), by said device, a device identifier (ID) to said computer;
- executing (24), by said computer, a driver of the device (DRVID) associated with said device identifier;
- obtaining (26) a list of the functions of the device (FCTLIST) by said computer;
**characterized in that** it comprises:
- triggering (28), by the driver of the device and on said computer, the execution of drivers (DRVFN1, DRVFN2) associated with said listed functions and;
- managing (30), by said driver of the device, the data streams between the various functions of the device and said corresponding function drivers.

2. Method according to Claim 1, **characterized in that** said executing the driver of the device triggers transmitting, to the device, a control module suitable for drawing up said list of functions.

3. Method according to any one of claims 1 or 2, **characterized in that** said driver of the device is also a driver of one of the functions of the device.

4. Method according to any one of claims 1 to 3, **characterized in that** one of the functions of said device is a function for receiving a television signal (TV) and another function of the device is a function for receiving an infrared signal (IR).

5. Computer program medium for driving a multifunction device (6) intended to be connected to said computer (2) , said program comprising software code instructions which, when executed by a processor of said computer, bring about:
- in response to the receipt (20) of a device identifier, executing (22) , by said computer, a driver of the device associated with said device identifier;
- in response to the receipt (26) of a list of the functions (FCTLIST) of said device, triggering (28), by the driver of the device and on said computer, the execution of drivers (DRVFN1, DRVFN2) associated with said listed functions and;
- managing (30), by said driver of the device, the data streams between the various functions of the device and said corresponding function drivers.

6. Computer program medium according to Claim 5, further comprising software code instructions which, when executed by a processor of said computer, bring about on completion of the execution of the driver of the device, the transmission, to the device, of a control module suitable for drawing up said list of functions.

7. Computer program according to any one of claims 5 or 6, further comprising software code instructions which, when executed by a processor of said computer, bring about the processing of one of the data streams originating from said device.

## Patentansprüche

1. Verfahren zur Verbindung einer Multifunktionsvornchtung (6) mit einem Computer (2), umfassend die folgenden Schritte:
- die Übertragung (22) einer Vorrichtungskennung (ID) durch die Vorrichtung zu dem Computer;
- die Ausführung (24) eines der Vorrichtungskennung zugeordneten Treibers der Vorrichtung (DRVID);
- das Erhalten (26) einer Liste der Funktionen der Vorrichtung (FCTLIST) durch den Computer;
**gekennzeichnet durch**
- die Auslösung (28), **durch** den Treiber der Vorrichtung und auf dem Computer, der Ausführung von den aufgelisteten Funktionen zugeordneten Treibern (DRVFN1, DRVFN2) und;
- die Verwaltung (30) der Datenflüsse zwischen den verschiedenen Funktionen der Vorrichtung und den entsprechenden Funktionstreibern **durch** den Treiber der Vorrichtung.

2. Verfahren nach Anspruch 1, **dadurch gekennzeichnet, dass** der Schritt der Ausführung des Treibers der Vorrichtung die Übertragung eines Kontrollmoduls, das diese Liste der Funktionen erstellen kann, zur Vorrichtung mit sich bringt.

3. Verfahren nach einem der Ansprüche 1 und 2, **dadurch gekennzeichnet, dass** der Treiber der Vorrichtung auch ein Treiber einer der Funktionen der Vorrichtung ist.

4. Verfahren nach einem der Ansprüche 1 bis 3, **dadurch gekennzeichnet, dass** eine der Funktionen der Vorrichtung eine Funktion des Empfangs eines Fernsehsignals (TV) und eine andere Funktion der Vorrichtung eine Funktion des Empfangs eines Infrarotsignals (IR) ist.

5. Computerprogramm zum Steuern einer Multifunktionsvorrichtung (6), die dazu bestimmt ist, an den Computer (2) angeschlossen zu werden, wobei dieses Programm Softwarecodebefehle umfasst, die, wenn sie von einem Rechner des Computers ausgeführt werden, mit sich bringen:
- als Antwort auf den Empfang (20) einer Vorrichtungskennung (ID) die Ausführung (22) eines der Vorrichtungskennung zugeordneten Treibers der Vorrichtung (DRVID) durch den Computer;
- als Antwort auf den Empfang (26) einer Liste der Funktionen (FCTLIST) der Vorrichtung die Auslösung (28), durch den Treiber der Vorrichtung und auf dem Computer, der Ausführung von den aufgelisteten Funktionen zugeordneten Treibern (DRVFN1, DRVFN2) und;
- die Verwaltung (30) der Datenflüsse zwischen den verschiedenen Funktionen der Vorrichtung und den entsprechenden Funktionstreibern.

6. Computerprogramm nach Anspruch 5, **dadurch gekennzeichnet, dass** es Softwarecodebefehle umfasst, die, wenn sie von einem Rechner des Computers ausgeführt werden, nach der Ausführung des Treibers der Vorrichtung die Übertragung eines Kontrollmoduls, das die Liste der Funktionen erstellen kann, zu der Vorrichtung mit sich bringen.

7. Computerprogramm nach einem der Ansprüche 5 und 6, **dadurch gekennzeichnet, dass** es Softwarecodebefehle umfasst, die, wenn sie von einem Rechner des Computers ausgeführt werden, die Verarbeitung eines der von der Vorrichtung kommenden Datenflüsse mit sich bringen.
